# EUROPEAN PATENT APPLICATION

(11) **EP 3 422 680 A1**
(43) Date of publication of application: **02.01.2019**
(21) Application number: 17179127.0
(22) Date of filing: 30.06.2017
(51) Int. Cl.: H04M 1/60, H04M 1/725

(54) **WRIST-WORN SMART DEVICE, SYSTEM, METHOD AND COMPUTER PROGRAM**

(71) Applicant: Vestel Elektronik Sanayi ve Ticaret A.S., 45030 Manisa (TR)
(72) Inventor: ÇUBUKÇU, Baran, 45030 Manisa (TR); ÖZBAY, Mustafa Caner, 45030 Manisa (TR)
(74) Representative: Flint, Adam

(57) **Abstract**

The present disclosure relates to a wrist-worn smart-device (108). The wrist-worn smart device (108) has at least one operational setting. The wrist-worn smart-device (108) comprises a transceiver configured for short-range communication with a corresponding short-range transceiver device located in a motor vehicle. The wrist-worn smart-device (108) is configured such that, in response to establishing communication with the short-range transceiver device located in the said a motor vehicle, the wrist-worn smart-device (108) is configured to adjust the at least one operational setting.

## Description

### Technical Field

The present disclosure relates to a wrist-worn smart device and a system comprising such a wrist-worn smart device, as well as a corresponding method and computer program.

### Background

Wrist-worn smart devices are known, and comprise devices such as smart-watches and smart-wristbands. Such devices can provide a function to a wearer, such as indicating a time of day to a user. Such devices can also provide one or more alternative or further functions or settings, such as notifying a user of an incoming phone call or message via a display on the smart-device.

### Summary

According to a first aspect disclosed herein, there is provided a wrist-worn smart-device having at least one operational setting; the wrist-worn smart-device comprising a transceiver configured for short-range communication with a corresponding short-range transceiver device located in a motor vehicle; the wrist-worn smart-device configured such that, in response to establishing communication with the short-range transceiver device located in the said a motor vehicle, the wrist-worn smart-device is configured to adjust the at least one operational setting.

According to an example, the operational setting comprises activation of a display of the wrist-worn smart-device in response to movement of the wrist-worn smart-device from a first orientation to a second orientation, the movement from the first orientation to the second orientation indicative of a user turning their wrist.

According to an example, the operational setting comprises a notification setting.

According to an example, the adjusting the at least one operational setting comprises adjusting the at least one operational setting from a first mode in which notifications are displayed on a display of the wrist-worn smart-device to a second mode in which notifications are not displayed on the display of the wrist-worn smart-device.

According to an example, when in the second mode the wrist-worn smart-device is configured to one of: block incoming notifications; save incoming notifications for later display; divert incoming notifications to a separate communications or display device.

According to an example, the notifications comprise notifications of one or more of: incoming calls; incoming messages.

According to an example, the adjusting the at least one operational setting comprises disabling the operational setting.

According to an example, the wrist-worn smart-device is configured to perform the adjusting the at least one operational setting only when it is determined that the wrist-worn smart-device is being worn on an arm of the user which is operating a steering wheel of the a said vehicle.

According to an example, the wrist-worn smart-device comprises a smart-watch or smart-wristband.

According to an example, the wrist-worn smart-device is configured to communicate with the short-range transceiver device using a near field communication or radio frequency identification communication protocol.

According to an example, the short-range transceiver device is located in or on a steering wheel of the motor vehicle.

According to a second aspect there is provided a system comprising a wrist-worn smart-device as set forth in the first aspect and a controlling computer in communication with the wrist-worn smart-device.

According to an example, the controlling computer comprises a mobile device of the user or a computer of the vehicle, and the controlling computer is configured to cause the wrist-worn smart-device to adjust the at least one operational setting.

According to a third aspect there is provided a method comprising: establishing communication between a wrist-worn smart-device and a short-range transceiver device located in a motor vehicle; and in response to the establishing communication, adjusting at least one operational setting of the wrist-worn smart-device.

According to a fourth aspect there is provided a computer program comprising instructions that when executed, cause a processor to carry out the method of the third aspect.

### Brief Description of the Drawings

To assist understanding of the present disclosure and to show how embodiments may be put into effect, reference is made by way of example to the accompanying drawings in which:
Figure 1 shows schematically a system incorporating a wrist-worn smart device.
Figure 2 shows schematically a system incorporating a wrist-worn smart device.
Figure 3 shows schematically some features of a wrist-worn smart device and a system incorporating the wrist-worn smart device;
Figure 4 is a flow-chart which shows a method according to the present disclosure.

### Detailed Description

The present disclosure has applicability to wrist-worn smart devices, and a system incorporating such a wrist-worn smart device, as well as a method and associated computer program for operating the wrist-worn smart device. A wrist-worn smart device may be in the form of a smart-wristband or a smartwatch, for example

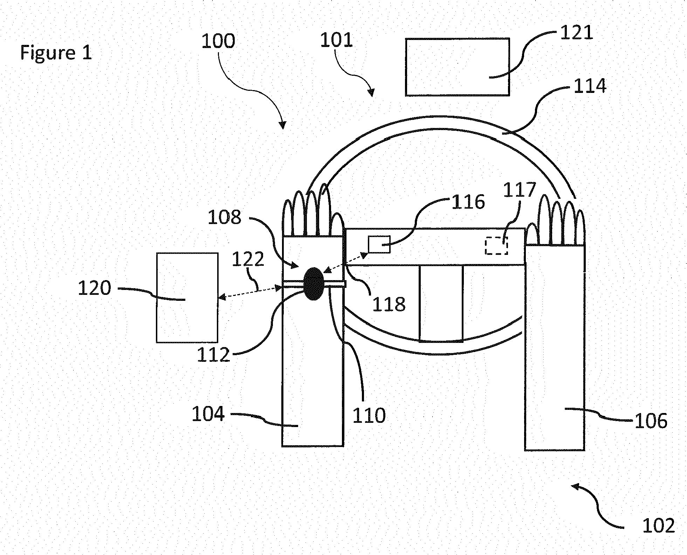

Figure 1 shows an environment 100 in which an example wrist-worn smart device 108 may be worn. The environment 100 is an interior of a vehicle 101, such as a motor vehicle. The motor vehicle 101 comprises a steering wheel 114. A user 102 is schematically shown having a left arm 104 and a right arm 106 with which the user grips or holds the steering wheel 114. The user 102 is wearing a wrist-worn smart device 108. The smart-device 108 comprises a band or strap 110 and a display 112. In the example of Figure 1 the user 102 is wearing the smart-device 108 on their left wrist. Of course, the user can also wear the smart-device 108 on their right wrist. Indeed, the user 102 can wear one or more such wrist-worn smart devices on each wrist.

The wrist-worn smart device 108 has at least one operational setting. For example, an operational setting may be that when a user rotates their wrist (on which the device is worn) from a first position or orientation to a second position or orientation, then the smart device 108 may move or transition from a sleep state to an awake state. For example a display of the smart-device may transition from an "off" or inactive state to an "on" or active state. In the inactive state the display is inactive and may display limited or no information. In the active state the display is active and displays more information to the user than when the display is in the inactive state. In the active state the display may be brighter than when in the inactive state.

The wrist-worn smart device 108 may have one or more alternative or additional operational setting(s). For example an operational setting may be a manner in which notifications are displayed on the device. A notification may be, for example, a notification of an incoming message. The message may be a text message or a voice message, for example. A notification may be, for example, a notification of an incoming telephone call. For example the user may have an associated mobile device 120, and the notification on the smart-device 108 notifies the user 102 that there is an incoming call which may be answered on the mobile device 120. Additionally or alternatively the user can answer and conduct the call on the smart device 108, where the smart device 108 is in communication with mobile device 120. A notification may be, for example, a notification from one or more websites. For example a notification may notify a user of a news story from a news website. A notification may be, for example, an alarm or reminder which the user has set.

Therefore the operational setting(s) may be associated with a state or mode of the display 112 of the smart device 108. More particularly the operational setting(s) may define a manner in which the display operates and/or a manner in which information is displayed on the display 112. The smart-device 108 may additionally comprise some operational settings which are not associated with the display 112 or which do not alter operation of the display.

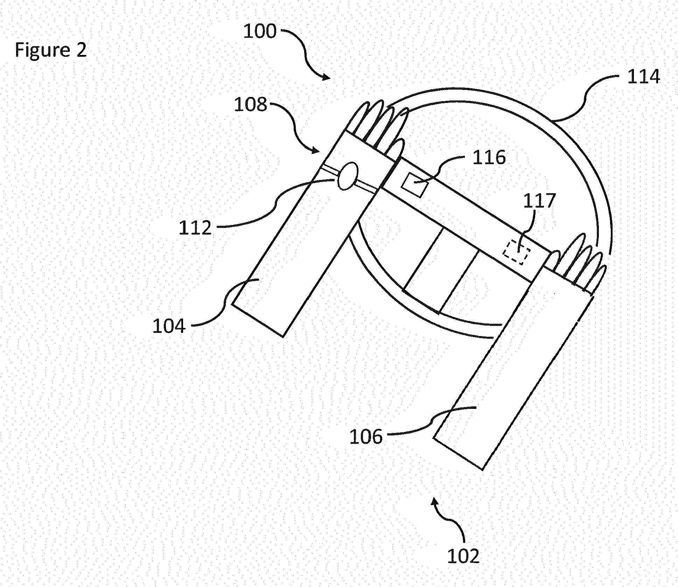

In the example of Figure 1 the display 112 of the smart-device 108 is in an off or inactive state, as schematically shown by the blacked-out display 112. Turning to Figure 2, in this Figure the user has rotated the steering wheel 114. As part of this action of rotating the steering wheel the user 102 has also moved and/or rotated their arm on which the wrist-worn smart device 108 is worn. The wrist-worn smart device 108 interprets this as a movement or flick of the wrist intended to put the display 112 of the smart device 108 into an active mode. Therefore in Figure 2 the display 112 is schematically shown in an active state by means of the white or clear display face 112 (in contrast with the blacked-out display face of Figure 1).

The present inventors have recognised that there is a potential problem. For example, if the display is moved or transitioned from an inactive to an active state (or vice versa) while the user is driving then this may distract the user, which could be dangerous. Likewise, if notifications are displayed on the display 112 while the user is driving then this may also be distracting. The distraction may be further exacerbated at night time when the contrast between ambient light and a brightness of the display 112 when in the active state may be increased.

As shown in Figures 1 and 2 the steering wheel 114 is fitted with a short-range communication device 116. The communication device 116 may be a transmitting device. The communication device 116 may, in some embodiments, also be capable of receiving signals. That is in some embodiments the communication device 116 may be a transceiver or transponder device. Hereon the short-range communication device 116 is referred to as a transceiver device 116. The transceiver device 116 may be, for example, a near-field communication (NFC) device or a radio frequency identification (RFID) device. The transceiver device may alternatively be a WiFi enabled transceiver device and/or a Bluetooth enabled transceiver device. Although in Figure 1 the transceiver device 116 is shown as located on the steering wheel 116 it will be understood that in other embodiments the transceiver device 116 may be located elsewhere in the vehicle. The vehicle 101 may also comprise a plurality of such transceiver devices 116. For example a first transceiver device 116 may be located on a left hand side of the steering wheel 114 and a second transceiver device 117 (shown in phantom in Figures 1 and 2) may be located on a right hand side of the steering wheel 114. Whatever the position of, and/or number of, transceiver device(s) located in the vehicle 101, it will be understood that they are positioned so as to identify presence of a smart-device 108 (and consequently the user 102) in the vehicle 101. In at least some examples the position of the transceiver device 116, and communication range of the transceiver device, is selected so as to identify when a user is driving the vehicle 101.

In view of the above identified problem(s), the wrist-worn smart device 108 is configured for short-range communication with the transceiver device 116 of the vehicle 101. For example the smart device 108 and transceiver 116 may communicate via communication link 118 as shown in Figure 1. In response to establishing communication between the smart-device 108 and the transceiver 116, the smart-device 108 is configured or arranged to adjust at least one operational setting of the smart-device 108.

For example, where the operational setting is that the display 112 is arranged to transition from an inactive state to an active state in response to the user turning their wrist, then this setting may be adjusted or disabled. Therefore when the user 102 is driving the vehicle 101 the user 102 will not be distracted by activation of the display 112 of the smart-device 108.

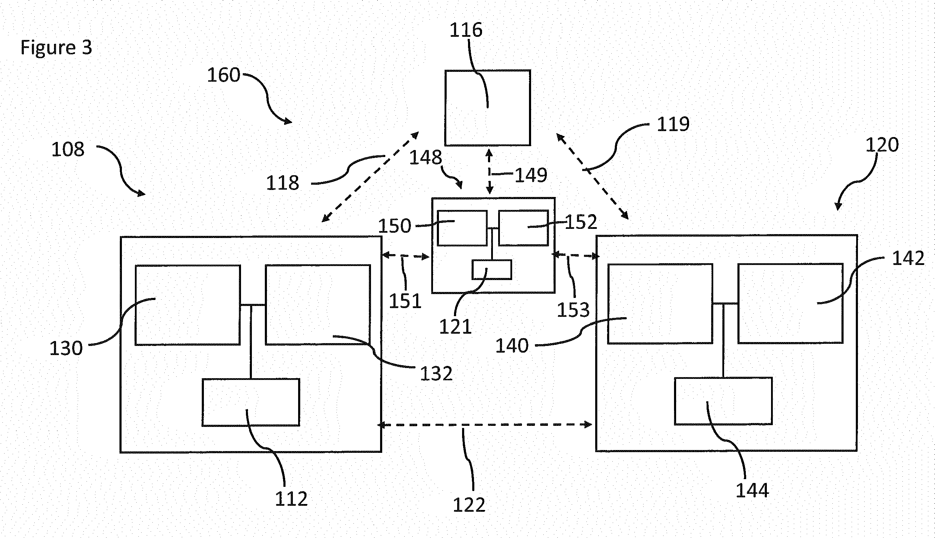

Where the operational setting is a manner of displaying notifications on the display 112, then this setting may be adjusted or disabled. In an example, the adjusting of a notification setting comprises switching from a notification setting in which notifications are displayed on the display 112 to a notification setting in which incoming notifications are blocked or prevented from being displayed on the display 112. In some examples the adjusting of a notification setting comprises switching from a notification setting in which notifications are displayed on the display 112, to a notification setting in which incoming notifications are saved in a memory of the smart-device 108 and not displayed until later, for example until when the smart-device is out of range of the transceiver device 116, at which point they may be displayed on the display 112. In some examples the adjusting of a notification setting comprises switching from a notification setting in which notifications are displayed on the display 112 to a notification setting in which notifications are diverted to a separate communication or display device. The separate communication or display device may be, for example, a mobile device 120 of the user. Additionally or alternatively the separate communication or display device may be a display 121 of the vehicle 101. To this end the smart device 108 may also be in communication with the mobile device 120, as shown schematically by the communication link 122. The smart device 108 and/or mobile device 120 may also be configured for communication with an on-board computer of the vehicle 101, as will be explained in more detail with respect to Figure 3.

The operating range or distance of the transceiver 116 of the vehicle (and/or operating range or distance of a corresponding transceiver of the smart device 108) is, in some examples less than 1 metre. This means that a passenger's smart device will not be or is unlikely to be affected by the transceiver 116. In some examples the operating range of the transceiver device 116 and/or smart device 108 is less than 50 cm. In some examples the operating range of the transceiver device 116 and/or smart device 108 is less than 15 cm, or in some examples less than 10 cm. This means that in some examples a user 102 (for example a driver) can still operate their smart-device 108 in an unrestricted fashion so long as they hold it sufficiently far away from the corresponding transceiver 116. Such examples enable the user 102 to move their wrist (and consequently wrist-worn smart device 108) away from the transceiver 116 of the vehicle, such that the smart-device's operational settings (e.g. display, notifications etc.) are enabled. This may be useful, for example, when the user has parked their car or is stuck in traffic and it is therefore safe to look at the display 112 of the smart-device 108. It also means, in some examples and dependent upon transceiver/smart-device range, that if the transceiver is located on a left hand side of the steering wheel 114 then a wrist-worn smart device being worn on the user's right wrist (and vice versa) may be unaffected by the transceiver 116. So in some examples, where it is deemed safe to do so, a user who is driving one-handed may still be able to operate/interact with the wrist-worn smart device 108. Effectively, in such examples, the wrist-worn smart-device 108 is configured to perform the adjusting the at least one operational setting only when it is determined that the wrist-worn smart-device is being worn on an arm of the user which is operating a steering wheel of the vehicle.

An exemplary system 160 is schematically shown in Figure 3.

The user's wrist worn smart-device is schematically shown at 108. The smart-device 108 comprises a memory 130, a processor 132, and display 112.

The user's mobile device is schematically shown at 120. The mobile device 120 comprises memory 140, processor 142, and display 144.

A computer of the vehicle 101 is schematically shown at 148. The computer 148 comprises a memory 150 and a processor 152, and the computer 148 comprises or is at least in communication with display 121 of the vehicle 101.

The short-range transceiver of the vehicle is schematically shown at 116.

Two or more components of the system 160 can communicate with each other. For example wrist-worn smart device 108 can communicate with short-range transceiver 116 on communication link 118, and vice versa. For example wrist-worn smart device 108 can communicate with computer 148 on communication link 151, and vice versa. For example wrist-worn smart device 108 can communicate with mobile device 120 on communication link 122, and vice versa. For example mobile device 120 can communicate with computer 148 on communication link 153, and vice versa.. For example mobile device 120 can communicate with short-range transceiver 116 on communication link 119, and vice versa. For example computer 148 can communicate with short-range transceiver 116 on communication link 149, and vice versa. Of course this is by way of example only, and in other examples there may be more or fewer communication links. For example the wrist-worn smart device 108 may be configured for communication with transceiver 116 and mobile device 120 but not with computer 148 etc.

In some examples one of the components of the system 160 may be considered a controlling computer. For example the controlling computer may be any one of: wrist-worn smart device 108; computer 148 of the vehicle; mobile device 120. According to some examples the controlling computer can control the at least one operational setting of the wrist-worn smart device 108, to at least some extent. For example the controlling computer may cause the wrist-worn smart device to adjust the one or more operational settings. Where notifications are diverted from the wrist-worn smart device 108 to the display 144 of the mobile device 120 or the display 121 of the vehicle, then the controlling computer may control the routing of those diverted messages.

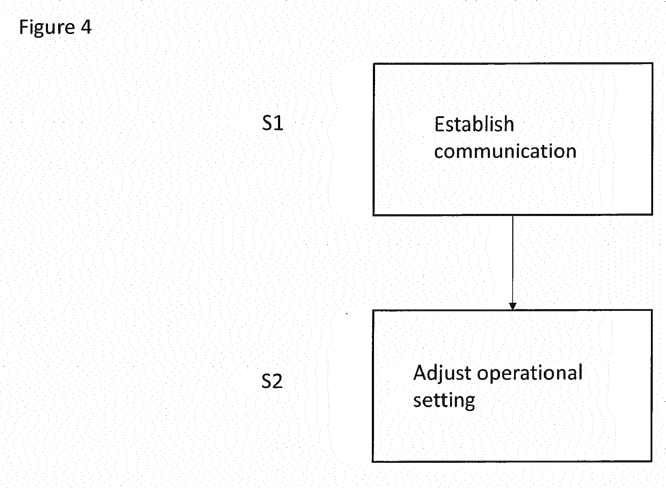

Figure 4 is a flow-chart which shows a method according to an example. At S1, communication is established between a wrist-worn smart device 108 and a short range transceiver device 116 located in a motor vehicle 101. At S2, and in response to the establishing communication, at least one operational setting of the wrist-worn smart device 108 is adjusted.

Whilst it has been discussed that the examples may prevent a user from being distracted by their wrist-worn smart device while driving, the examples may also save battery life of the wrist-worn smart device by virtue of placing a display of the smart device in an inactive state (and/or blocking notifications) whilst the wearer of the device is driving.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A wrist-worn smart-device having at least one operational setting;
the wrist-worn smart-device comprising a transceiver configured for short-range communication with a corresponding short-range transceiver device located in a motor vehicle;
the wrist-worn smart-device configured such that, in response to establishing communication with the short-range transceiver device located in the said a motor vehicle, the wrist-worn smart-device is configured to adjust the at least one operational setting.

2. A wrist-worn smart-device according to claim 1, wherein the operational setting comprises activation of a display of the wrist-worn smart-device in response to movement of the wrist-worn smart-device from a first orientation to a second orientation, the movement from the first orientation to the second orientation indicative of a user turning their wrist.

3. A wrist-worn smart-device according to claim 1, wherein the operational setting comprises a notification setting.

4. A wrist-worn smart-device according to claim 3, wherein the adjusting the at least one operational setting comprises adjusting the at least one operational setting from a first mode in which notifications are displayed on a display of the wrist-worn smart-device to a second mode in which notifications are not displayed on the display of the wrist-worn smart-device.

5. A wrist-worn smart device according to claim 4, wherein when in the second mode the wrist-worn smart-device is configured to one of: block incoming notifications; save incoming notifications for later display; divert incoming notifications to a separate communications or display device.

6. A wrist-worn smart-device according to any of claims 3 to 5, wherein the notifications comprise notifications of one or more of: incoming calls; incoming messages.

7. A wrist-worn smart-device according to any preceding claim, wherein the adjusting the at least one operational setting comprises disabling the operational setting.

8. A wrist-worn smart-device according to any preceding claim, wherein the wrist-worn smart-device is configured to perform the adjusting the at least one operational setting only when it is determined that the wrist-worn smart-device is being worn on an arm of the user which is operating a steering wheel of the a said vehicle.

9. A wrist-worn smart-device according to any preceding claim, wherein the wrist-worn smart-device comprises a smart-watch or smart-wristband.

10. A wrist-worn smart-device according to any preceding claim, the wrist-worn smart-device configured to communicate with the short-range transceiver device using a near field communication or radio frequency identification communication protocol.

11. A wrist-worn smart-device according to any preceding claim, the short-range transceiver device located in or on a steering wheel of the motor vehicle.

12. A system comprising a wrist-worn smart-device as set forth in any preceding claim and a controlling computer in communication with the wrist-worn smart-device.

13. A system according to claim 12 wherein the controlling computer comprises a mobile device of the user or a computer of the vehicle, and the controlling computer is configured to cause the wrist-worn smart-device to adjust the at least one operational setting.

14. A method comprising:
establishing communication between a wrist-worn smart-device and a short-range transceiver device located in a motor vehicle; and
in response to the establishing communication, adjusting at least one operational setting of the wrist-worn smart-device.

15. A computer program comprising instructions that when executed, cause a processor to carry out the method of claim 14.
